# FASCICULE DE BREVET EUROPEEN

(11) **EP 1 602 273 B1**
(45) Date de publication et mention de la délivrance du brevet: **21.03.2007**
(21) Numéro de dépôt: 04013099.9
(22) Date de dépôt: 03.06.2004
(51) Int. Cl.: A01G 25/02, B29C 47/02

(54) **Installation de fabrication de tuyaux d'irrigation goutte à goutte**
Vorrichtung zur Herstellung von Bewässerungsrohren zur Tropfbewässerung
Device for producing drip irrigation hoses

(43) Date de publication de la demande: 07.12.2005
(73) Titulaire: Kertscher, Eberhard, 1462 Yvonand (CH); The Thomas Machines SA, 2108 Couvet (CH)
(72) Inventeur: Bernauer, Thomas, 2000 Neuchâtel (CH); Kertscher, Eberhard, 1462 Yvonand (CH)
(74) Mandataire: Ravenel, Thierry Gérard Louis

(56) Documents cités:
- WO-A-99/55141
- US-A- 3 895 085
- US-A- 4 044 084
- US-B1- 6 461 468
- US-B2- 6 368 098

## Description

La présente invention est relative à une ligne de fabrication de tuyaux d'irrigation goutte-à-goutte. Plus particulièrement, l'invention concerne une telle installation comprenant un bac de refroidissement muni d'un dispositif de stabilisation permettant d'améliorer les caractéristiques dimensionnelles des tuyaux fabriqués.

Il est de technique courante d'utiliser, pour certaines irrigations, des tuyaux dits "goutte-à-goutte". Il s'agit de tuyaux dont la paroi est percée, à des intervalles de distance fixés à l'avance, par des trous de petit diamètre par lesquels l'eau s'écoule dans le sol. Pour contrôler avec précision le débit des trous, on prévoit au niveau de chaque trou un limiteur de débit couramment appelé "goutteur" qui se compose d'une pièce en matière plastique creuse qui est collée sur la paroi interne du tuyau. Cette pièce présente, du côté tourné vers la paroi intérieure du tuyau, une partie en creux qui forme une chambre collectrice. Cette chambre collectrice est reliée à l'espace intérieur du tuyau par un conduit formant labyrinthe constitué par une rainure préparée à l'avance sur la face cylindrique du goutteur qui est destinée à être tournée vers la face interne du tuyau.

Dans les installations de fabrication de tuyaux d'irrigation goutte-à-goutte comme, par exemple, celle décrite dans la demande de brevet EP 0 970 602, des goutteurs sont amenés de manière régulière dans un poste d'extrusion comprenant des moyens d'extrusion, de calibrage et de soudage à partir d'un dispositif d'approvisionnement tel qu'un bol centrifugeur et orienteur permettant de fournir des goutteurs selon une orientation déterminée. Dans le poste d'extrusion, le tuyau est produit en continu, calibré et les goutteurs sont soudés à intervalles réguliers à la paroi intérieure du tuyau encore chaud afin qu'ils se collent contre celle-ci en fondant localement. Une fois l'ensemble tuyau-goutteurs refroidi dans un bac de refroidissement à eau, un trou est percé dans la paroi du tuyau, au droit de la chambre collectrice.

Les installations de ce type présentent toutes un inconvénient important en ce qu'elles ne permettent pas d'obtenir des tuyaux d'irrigation ayant des caractéristiques dimensionnelles et géométriques constantes. Après que les goutteurs ont été soudés à la face intérieure du tuyau, le tuyau est tiré par des moyens de traction à travers le bac de refroidissement à la sortie duquel sa forme finale est figée. Or, lors de la traversée du bac de refroidissement, le tuyau est soumis à diverses contraintes telles que la variation du niveau d'eau dans le bac, des frottements irréguliers au niveau des joints de sortie du bac, des à coup dans la traction etc. L'ensemble de ces contraintes a notamment pour conséquence de provoquer des variations de la vitesse de défilement du tuyau et par là-même des variations des efforts de traction sur le tuyau. Selon l'importance de ces variations et dans la mesure où la matière du tuyau n'est pas encore complètement solidifiée, les variations peuvent étirer le tuyau, modifier le diamètre et/ou l'épaisseur de la paroi du tuyau ou encore faire varier la distance entre les goutteurs. La demanderesse a également observé que les diverses contraintes susmentionnées pouvaient en outre induire une torsion vers la droite et/ou vers la gauche du tuyau autour de son axe longitudinal et provoquer un désalignement des goutteurs le long du tuyau. Il résulte de ce dernier défaut que les goutteurs ne se trouvent pas en regard de l'outil de coupe au moment où ce dernier pratique les ouvertures dans le tuyau. Ces inconvénients ne sont pas sans conséquence économique dans la mesure où l'on doit interrompre la fabrication et mettre au rebut les tronçons de tuyau concernés dès que l'on observe que l'un des défauts susmentionnés dépasse un seuil acceptable.

L'ensemble des ces inconvénients fait donc que l'on doit admettre aujourd'hui des tolérances de fabrication plus grandes au détriment de la qualité des produits finis. Ces inconvénients conduisent en outre à des pertes de matière pouvant atteindre plusieurs tonnes de matière par ligne et par année, ce qui a pour effet d'augmenter le prix de revient des tuyaux.

La présente invention a pour but de remédier aux inconvénients susmentionnés ainsi qu'à d'autres encore en fournissant une installation de fabrication de tuyaux d'irrigation goutte à goutte permettant de fabriquer des tuyaux d'irrigation ayant des caractéristiques dimensionnelles et géométriques améliorées.

La présente invention a également pour but de fournir une telle installation mettant en oeuvre des moyens simples et peu coûteux.

A cet effet, la présente invention concerne une installation pour la fabrication d'un tuyau d'irrigation goutte à goutte comprenant un poste d'amenée des goutteurs suivi d'un poste d'extrusion comprenant des moyens d'extrusion, des moyens de calibrage dudit tuyau et des moyens pour le soudage des goutteurs à la paroi intérieure dudit tuyau, d'un poste de refroidissement et d'un poste de perçage, caractérisée en ce qu'en aval du poste d'extrusion est prévu un poste de stabilisation comprenant deux courroies sans fin associées à des moyens moteurs pour être entraînées à une vitesse linéaire sensiblement égale à la vitesse d'avance dudit tuyau, les brins adjacents desdites deux courroies étant appliquées respectivement contre des faces opposées du tuyau.

Grâce à ces caractéristiques, et notamment grâce au fait que les courroies sont entraînées à une vitesse linéaire sensiblement égale à la vitesse d'avance du tuyau, la présente invention permet un entraînement sans frottement du tuyau en formation de sorte qu'on limite, voire élimine les variations de vitesse et donc d'efforts de traction sur le tuyau alors que sa matière n'est pas encore solidifiée. Les courroies étant appliquées contre des faces opposées du tuyau, elles assurent en outre un guidage de celui-ci de sorte que l'on réduit fortement, voire élimine la torsion du tuyau autour de son axe longitudinal et par conséquent le problème de désalignement des goutteurs. On peut donc, grâce aux caractéristiques de l'invention, obtenir un tuyau présentant des caractéristiques dimensionnelles et géométriques améliorées, et en particulier plus constantes. Les tolérances de fabrication peuvent alors être considérablement réduites.

Selon des caractéristiques complémentaires de l'invention, le poste de stabilisation est disposé au voisinage immédiat du poste d'extrusion, de préférence à une distance de l'ordre de 600 mm de ce dernier. Le poste de stabilisation est disposé avantageusement dans le bac de refroidissement, de sorte qu'il n'affecte pas l'encombrement général de l'installation.

Selon encore une autre caractéristique avantageuse de l'invention, les courroies du poste de stabilisation s'étendent sur une longueur minimum d'environ 300 mm et, de préférence, sur une longueur comprise entre 400 mm et 1000 mm. La longueur sera essentiellement déterminée en fonction du temps nécessaire pour refroidir suffisamment le tuyau afin qu'il soit stable dimensionnellement. Elle dépendra donc en outre de l'épaisseur du tube, de son diamètre et de la température du milieu dans lequel il défile entre les courroies du poste de stabilisation.

Selon un mode de réalisation avantageux de l'invention, le poste de stabilisation comprend en outre des moyens pour ajuster la distance entre lesdits brins adjacents desdites courroies. L'installation peut ainsi s'adapter à la production de tuyaux de différents diamètres. D'autre part, ces moyens de réglage permettent d'ajuster de manière précise ladite distance pour assurer un entraînement optimal du tuyau, c'est-à-dire sans frottement et sans déformation excessive de celui-ci.

D'autres caractéristiques et avantages de la présente invention ressortiront plus clairement de la description détaillée qui suit d'un exemple de réalisation du dispositif accumulateur selon l'invention, cet exemple étant donné à titre purement illustratif et non limitatif seulement, en liaison avec le dessin annexé sur lequel :
- la figure 1 est une représentation schématique d'une installation de fabrication de tuyaux d'irrigation du type goutte-à-goutte selon l'invention;
- la figure 2 est une vue de côté selon l'axe général de la ligne de fabrication du bac de refroidissement de l'installation selon l'invention;
- la figure 3 est une vue en coupe du bac de refroidissement selon la ligne III-III de la figure 2, et
- la figure 4 est une vue partielle de côté du bac de refroidissement montrant notamment les moyens de réglage de la distance entre les courroies du poste de stabilisation selon l'invention.

La présente invention procède de l'idée générale inventive qui consiste à entraîner et guider le tuyau sortant du poste d'extrusion entre deux courroies sans fin défilant à une vitesse linéaire sensiblement égale à la vitesse de défilement du tuyau pendant un temps suffisant pour que la matière formant le tuyau se solidifie, de sorte que pendant ce temps le tuyau conserve ses caractéristiques dimensionnelles et géométriques.

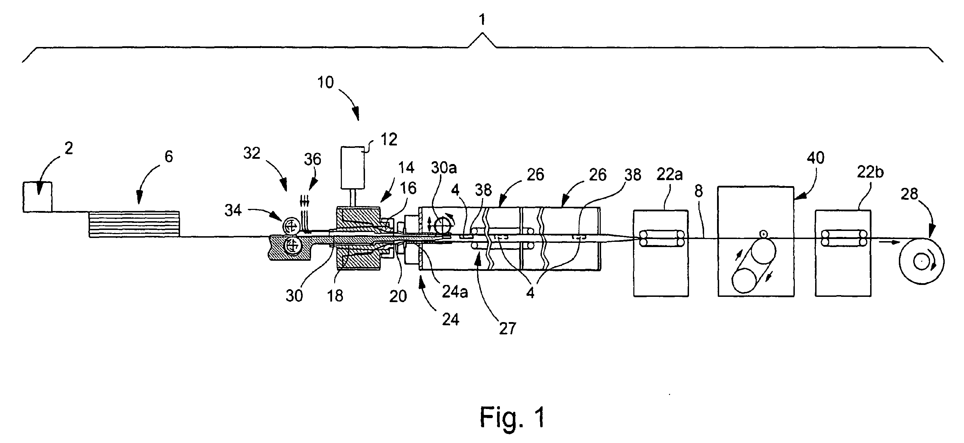

La figure 1 est une représentation schématique d'une ligne de fabrication de tuyaux d'irrigation du type goutte-à-goutte. Désignée dans son ensemble par la référence numérique générale 1, cette ligne de fabrication comprend un magasin 2 tel qu'un bol centrifugeur qui permet de trier, d'orienter et de positionner les goutteurs cylindriques 4 dans un dispositif accumulateur 6 en conformité avec la position qu'ils devront avoir une fois qu'ils seront introduits dans le tuyau d'irrigation 8. A la suite du dispositif accumulateur 6 est disposé un poste d'extrusion 10. Ce poste d'extrusion 10 comprend une chambre de fusion 12 de la matière plastique qui alimente un ensemble 14 pourvu d'une filière 16 à l'intérieur de laquelle est prévu un mandrin conique 18 disposé de telle façon qu'il sorte de la filière 16 une ébauche tubulaire 20. L'ébauche 20 est tirée par des postes de traction 22a et 22b en passant à travers des moyens de calibrage 24 et un bac de refroidissement 26 dans lequel est disposé un poste de stabilisation 27 selon l'invention. Au-delà du poste de traction 22b, le tuyau 8 est enroulé sur un tambour 28.

Une telle disposition est classique dans la technique de fabrication des tuyaux en matière plastique. Pour fixer les goutteurs 4, il est prévu que le mandrin 18 présente un passage axial à l'intérieur duquel est disposé un support de guidage 30 qui s'étend jusqu'à l'intérieur du calibreur 24a des moyens de calibrage 24. Le support de guidage 30 reçoit les goutteurs 4 à partir du magasin 2 via le dispositif accumulateur 6. Un dispositif de déplacement 32 muni, dans l'exemple représenté, de galets entraîneurs 34 assistés par des jets d'air 36 est prévu pour faire avancer les goutteurs 4 jusqu'à l'intérieur du calibreur 24a. En aval du calibreur, l'ébauche de tuyau 20 dont le diamètre est réduit par le calibreur 24a est amenée en contact avec le goutteur 4 au moment où sa consistance est encore pâteuse à l'aide d'un galet presseur 30a, ce qui assure le thermo-soudage de la face supérieure 38 du goutteur 4 contre la paroi intérieure de l'ébauche 20. En sortant des moyens de calibrage 24 et du bac de refroidissement 26, le tuyau 8 pénètre dans un poste de découpe 40 via le premier poste de traction 22a puis en sort pour pénétrer dans le deuxième poste de traction 22b. Dans le poste de découpe 40, le tuyau 8 est percé de petits trous pratiqués en regard des goutteurs 4 et par lesquels l'eau s'écoulera.

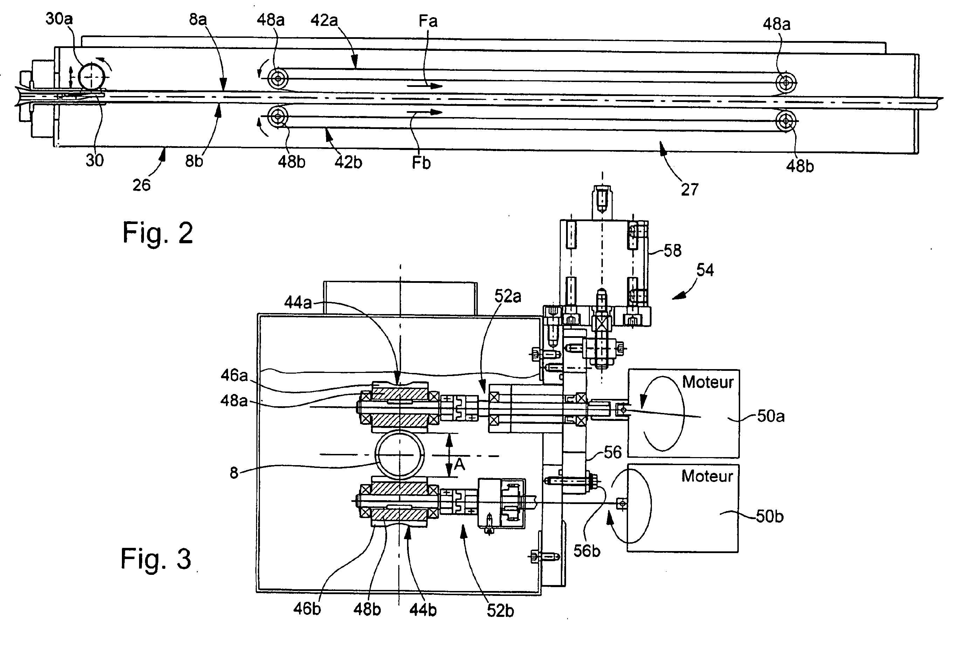

Les figures 2 et 3 sont respectivement des vues de côté et en coupe illustrant le poste de stabilisation 27 selon l'invention. Comme il ressort de ces figures, le poste de stabilisation 27 est disposé en aval des moyens de soudage 30, 30a dans le bac de refroidissement 26 à vide contenant un liquide de refroidissement. Dans l'exemple illustré, le poste de stabilisation est immergé dans le liquide de refroidissement. Le poste de stabilisation 27 comprend une courroie sans fin supérieure 42a et une courroie sans fin inférieure 42b dont les brins inférieur et supérieur respectifs sont sensiblement rectilignes et parallèles et maintenus écartés l'un de l'autre d'une distance A légèrement inférieure au diamètre du tuyau à fabriquer. Plus précisément, la distance A est telle qu'elle que les brins 42a et 42b sont appliqués contre des faces opposées 8a, 8b du tuyau 8 sans affecter ses caractéristiques dimensionnelles et géométriques et tout en assurant un entraînement et un guidage sans frottement du tuyau 8. A cet effet, les courroies 42a et 42b peuvent présenter un profil adapté à la forme du tuyau, par exemple en ayant une portion concave 44a, 44b (figure 3) et/ou être revêtues d'un garnissage 46a, 46b en matière élastique. A titre d'exemple, le garnissage peut être réalisé en caoutchouc ou en une mousse tel qu'une mousse de polyuréthane.

Chaque courroie 42a et 42b passe sur deux paires de poulies 48a et 48b, dont l'une est entraînée dans le sens des flèches Fa respectivement Fb par des moyens moteurs 50a , 50b disposés à l'extérieur du bac de refroidissement 26. Dans l'exemple illustré, les poulies 48a et 48b sont montées sur des broches 52a et 52b fixées en porte à faux à une paroi verticale 26a du bac de refroidissement 26. Les broches 52a et 52b et les poulies 48a et 48b forment ainsi une structure de support pour les courroies 42a et 42b.

Les moyens moteurs 50a et 50b sont commandés par des moyens de commande classiques (non représentés) pour entraîner les deux courroies 42a et 42b à une même vitesse linéaire correspondant sensiblement à la vitesse d'avance du tuyau 8 à la sortie du poste d'extrusion. Ainsi, le tuyau 8, lorsqu'il pénètre entre les deux courroies, peut être entraîné quasiment sans aucun frottement.

Selon un mode de réalisation avantageux, chacune des courroies 42a et 42b pourra être associée à un capteur de vitesse relié aux moyens de commande des moteurs afin de surveiller la vitesse des courroies et le cas échéant adapter la commande des moteurs pour entraîner les courroies à une vitesse de consigne.

Comme cela ressort notamment de la figure 2, le poste de stabilisation est disposé au voisinage immédiat et en aval du poste d'extrusion, typiquement à une distance de l'ordre de 600 mm. En effet, il a été observé qu'après avoir parcouru cette distance dans le liquide de refroidissement, la matière formant le tuyau 8 est suffisamment durcie superficiellement pour pouvoir être saisie sans dommage entre les brins des courroies 42a et 42b.

La longueur minimum des courroies 42a et 42b est déterminée notamment par les dimensions du tuyau 8, c'est-à-dire son diamètre et son épaisseur de paroi , sa vitesse d'avance dans l'installation, et les moyens (air, eau etc..) utilisés pour refroidir le tuyau. L'idée sous-jacente est que la longueur sur laquelle le tuyau doit être entraîné et guidé, et donc la longueur des courroies 42a et 42b, doit être suffisante pour qu'à la sortie des courroies 42a et 42b, la matière du tuyau soit suffisamment solidifiée pour éliminer toutes variations dimensionnelles si le tuyau venait à subir des contraintes telles que des pics d'efforts de traction dans la suite de son parcours dans l'installation de fabrication. La demanderesse a observé que pour des tuyaux présentant un diamètre de l'ordre de 10 à 30 mm, une épaisseur de paroi l'ordre de 0,2 mm et une vitesse d'avance de l'ordre de 150 m/mn, la longueur minimum des courroies 42a et 42b était de l'ordre de 300 mm et de préférence comprise entre 400 mm et 1000 mm.

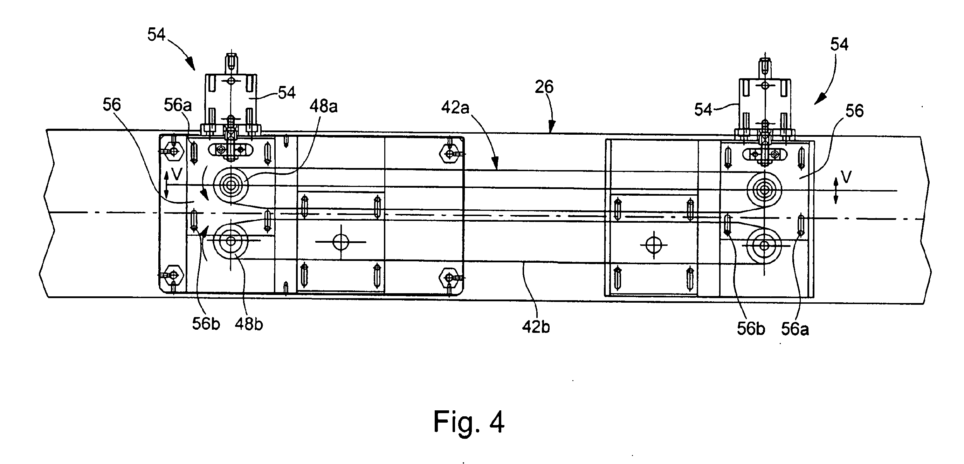

En se référant en particulier à la figure 4, on voit que le poste de stabilisation 27 comprend en outre des moyens 54 permettant d'ajuster la distance A entre les brins adjacents des courroies 42a et 42b. Dans l'exemple illustré, les moyens 54 sont associés à la courroie 42a. Les broches 52a portant les poulies 48a sont reliées aux moteurs 50a par une liaison à cardan et sont montées chacune sur une plaque 56 montée de manière à pouvoir coulisser selon la direction verticale V le long de la paroi verticale 26a du bac de refroidissement 26. Typiquement, la plaque 56 comprend des trous oblongs 56a orientés verticalement traversés par des vis de fixation 56b solidaires de la paroi verticale 26a. Les moyens 54 comprennent en outre des vérins 58, par exemple des vérins électriques, dont les corps sont solidaires du bac de refroidissement 26 et dont les tiges sont respectivement reliées aux plaques 56 portant les broches 52a. Le réglage de la distance A peut donc aisément être effectué en desserrant les vis de fixation 56b, puis en commandant les vérins 58 pour déplacer les plaques 56 jusqu'à obtenir la distance A souhaitée, puis en resserrant les vis de fixations 56b. On notera que les moyens 54 permettent aisément de donner une inclinaison à la courroie 42b par rapport à la courroie 42b si nécessaire.

Il va de soi que la présente invention n'est pas limitée au mode de réalisation qui vient d'être décrit et que diverses modifications et variantes simples peuvent être envisagées par l'homme du métier sans sortir du cadre de l'invention tel que défini par les revendications annexées.

## Revendications

1. Installation pour la fabrication d'un tuyau d'irrigation (8) goutte à goutte comprenant un poste (2) d'amenée des goutteurs (4) suivi d'un poste d'extrusion (10) comprenant des moyens d'extrusion, des moyens de calibrage (24) dudit tuyau (8) et des moyens pour le soudage des goutteurs (4) à la paroi intérieure dudit tuyau (8), d'un poste de refroidissement et d'un poste de perçage, **caractérisée en ce qu'**en aval du poste d'extrusion (19) est prévu un poste de stabilisation (27) comprenant deux courroies (42a, 42b) sans fin associées à des moyens moteurs (50a, 50b) pour être entraînées à une vitesse linéaire sensiblement égale à la vitesse d'avance dudit tuyau (8), les brins adjacents desdites deux courroies (42a, 42b) étant appliquées respectivement contre des faces opposées du tuyau (8).

2. Installation selon la revendication 1, **caractérisée en ce que** le poste de stabilisation (27) est disposé au voisinage immédiat du poste d'extrusion (10) de préférence à une distance de l'ordre de 600 mm.

3. Installation selon la revendication 1 ou 2, dans laquelle le poste de refroidissement comprend un bac (26) rempli d'un liquide de refroidissement, **caractérisée en ce que** le poste de stabilisation (27) est disposé dans le bac de refroidissement (26).

4. installation selon l'une des revendications 1 à 3, **caractérisée en ce que** lesdites courroies (42a, 42b) s'étendent sur une longueur minimum d'environ 300 mm.

5. Installation selon la revendication 4, **caractérisée en ce que** les courroies (42a, 42b) s'étendent sur une longueur comprise entre 400 mm et 1000 mm.

6. Installation selon l'une des revendications précédentes, **caractérisée en ce que** lesdits brins adjacents sont espacés l'un de l'autre d'une distance prédéterminée apte à entraîner ledit tuyau (8).

7. Installation selon la revendication 6, **caractérisée en ce que** le poste de stabilisation (27) comprend en outre des moyens pour ajuster la distance entre lesdits brins adjacents desdites courroies (42a, 42b).

8. Installation selon l'une quelconque des revendications 1 à 7, **caractérisée en ce que** les courroies (42a, 42b) sont revêtues sur leur face destinée à venir en contact avec le tuyau (8), d'une matière élastique.

9. Installation selon l'une des revendications 3 à 8 lorsqu'elles dépendent de la revendication 4, **caractérisée en ce que** les courroies (42a, 42b) sont suspendues dans ledit bac de refroidissement (26) au moyen d'une structure de support et **en ce que** ladite structure de support est fixée à une paroi dudit bac de refroidissement (26).

## Claims

1. Installation for manufacturing a drip irrigation pipe (8) including an emitter (4) feed station (2) followed by an extrusion station (10) including extrusion means, means (24) for calibrating said pipe (8) and means for bonding the emitters (4) to the inner wall of said pipe (8), a cooling station and a perforating station, **characterized in that** downstream of the extrusion station (10) there is provided a stabilisation station (27) including two endless belts (42a, 42b) associated with motor means (50a, 50b) for driving said belts at a linear speed substantially equal to the speed of advance of said pipe (8), the adjacent strands of two belts (42a, 42b) being respectively applied against opposite faces of the pipe (8).

2. Installation according to claim 1, **characterized in that** the stabilisation station (27) is arranged in immediate proximity to the extrusion station (10), preferably at a distance of the order of 600 mm.

3. Installation according to claim 1 or 2, wherein the cooling tank includes a tank (26) filled with a cooling liquid, **characterized in that** the stabilisation station (27) is arranged in the cooling tank (26).

4. Installation according to any of claims 1 to 3, **characterized in that** said belts (42a, 42b) extend over a minimum length of approximately 300 mm.

5. Installation according to claim 4, **characterized in that** the belts (42a, 42b) extend over a length comprised between 400 mm and 1000 mm.

6. Installation according to any of the preceding claims, **characterized in that** said adjacent strands are spaced at a predetermined distance from each other suitable for driving said pipe (8).

7. Installation according to claim 6, **characterized in that** the stabilisation station (27) further includes means for adjusting the distance between said adjacent strands of said belts (42a, 42b).

8. Installation according to any of claims 1 to 7, **characterized in that** the belts (42a, 42b) are coated with an elastic material on the face thereof that will come into contact with the pipe (8).

9. Installation according to any of claims 3 to 8, when they depend upon claim 4, **characterized in that** the belts (42a, 42b) are suspended in said cooling tank (26) by means of a support structure and **in that** said support structure is secured to a wall of said cooling tank (26).

## Patentansprüche

1. Vorrichtung zum Herstellen eines Schlauchs (8) für tropfweise Bewässerung umfassend eine Station (2) für die Zuführung von Tropfeinrichtungen (4), gefolgt von einer Station zum Extrudieren (10) enthaltend Mittel zum Extrudieren, Mittel (24) zum Kalibrieren des Schlauchs (8) und Mittel zum Schweißen von Tropfeinrichtungen (4) an die Innenwand des Schlauchs (8), eine Kühlstation und eine Station zum Durchbohren, **dadurch gekennzeichnet, dass** unterhalb der Station zum Extrudieren (10) eine Stabilisierungsstation (27) vorgesehen ist, die zwei endlose Bänder (42a, 42b) umfasst, die motorischen Mitteln (50a, 50b) zugeordnet sind, um mit einer linearen Geschwindigkeit, die im wesentlichen gleich der Vorschubgeschwindigkeit des Schlauchs (8) ist, bewegt zu werden, wobei die benachbarten Ränder der beiden Bänder (42a, 42b) jeweils gegen gegenüberliegende Flächen des Schlauchs (8) gedrückt werden.

2. Vorrichtung nach Anspruch 1, **dadurch gekennzeichnet, dass** die Stabilisierungsstation (27) in unmittelbarer Nachbarschaft der Station zum Extrudieren (10), vorzugsweise in einem Abstand in der Größenordnung von 600 mm, angeordnet ist.

3. Vorrichtung nach Anspruch 1 oder 2, in der die Kühlstation einen mit Kühlflüssigkeit gefüllten Behälter (26) umfasst, **dadurch gekennzeichnet, dass** die Stabilisierungsstation (27) in dem Kühlbehälter (26) angeordnet ist.

4. Vorrichtung nach einem der Ansprüche 1 bis 3, **dadurch gekennzeichnet, dass** die Bänder (42a, 42b) sich auf einer minimalen Länge von ungefähr 300 mm erstrecken.

5. Vorrichtung nach Anspruch 4, **dadurch gekennzeichnet, dass** die Bänder (42a, 42b) sich auf einer Länge zwischen 400 mm und 1000 mm erstrecken.

6. Vorrichtung nach einem der vorhergehenden Ansprüche, **dadurch gekennzeichnet, dass** die benachbarten Bänder voneinander in einer vorbestimmten, für ein Bewegtwerden des Schlauchs (8) geeigneten Entfernung beabstandet sind.

7. Vorrichtung nach Anspruch 6, **dadurch gekennzeichnet, dass** die Stabilisierungsstation (27) ferner Mittel zum Einstellen der Entfernung zwischen den benachbarten Bändern (42a, 42b) umfasst.

8. Vorrichtung nach einem der Ansprüche 1 bis 7, **dadurch gekennzeichnet, dass** die Bänder (42a, 42b) von einem elastischen Material umschlossen sind, um in Kontakt mit dem Schlauch (8) zu gelangen.

9. Vorrichtung nach einem der Ansprüche 3 bis 8, wenn sie vom Anspruch 4 abhängig sind, **dadurch gekennzeichnet, dass** die Bänder (42a, 42b) in dem Kühlbehälter (26) mittels einer Haltestruktur aufgehängt sind und dass die Haltestruktur an einer Wand des Kühlbehälters (26) befestigt ist.
